(19)

Europäisches Patentamt

European Patent Office

Office européen des brevets

(11) **EP 4 220 241 A1**

(12) **EUROPEAN PATENT APPLICATION**

(43) Date of publication:
**02.08.2023 Bulletin 2023/31**

(21) Application number: **22154038.8**

(22) Date of filing: **28.01.2022**

(51) International Patent Classification (IPC):
**G01V 9/02** (2006.01)        **G01F 1/704** (2006.01)
**G01P 5/00** (2006.01)

(52) Cooperative Patent Classification (CPC):
**G01V 9/02; G01F 1/7046; G01F 1/7048;
G01F 1/7086; G01P 5/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Université de Liège
4000 Liège (BE)**

(72) Inventors:
• **JAMIN, Pierre
  4000 Liège (BE)**
• **BROUYERE, Serge
  4000 Liège (BE)**

(74) Representative: **V.O.
P.O. Box 87930
2508 DH Den Haag (NL)**

(54) **GROUNDWATER FLUX MEASUREMENT MODULE**

(57)    Module for measuring groundwater flux and optionally solute flux comprising a fluid circuit loop having an abstraction connection and a discharge connection for connecting with a groundwater well respectively at two ends of a column of fluid in said groundwater well; an input line for receiving a volume of tracer, said input line being fluidly connected to the fluid circuit loop upstream from the discharge connection, and comprising an injection pump for injecting said volume of tracer through the discharge connection in the groundwater well; an output line for extracting a volume of fluid, said output line being fluidly connected to the fluid circuit loop downstream from the abstraction connection; a first measuring unit for measuring a tracer concentration in the fluid, said measuring unit being fluidly connectable to the fluid circuit loop between the abstraction connection and the discharge connection. System comprising such module and method for measuring groundwater flux with such module.

**Figure 1**

EP 4 220 241 A1

**Description**

FIELD OF THE INVENTION

The invention relates to the field of groundwater flux measurement, to modules, systems and methods for flux measurement.

STATE OF THE ART

The characterization of contaminated aquifers usually relies on the local (point) measurements of concentrations of pollutants in the ground and in groundwater using different sampling techniques and comparing it with environmental standards. Such local or point sampling is necessary but it does not allow identifying the dynamics of contamination, namely the quantity of pollutant actually moving through the aquifer and posing a risk of dispersion. Only by multiplying the pollutant concentration by the groundwater flux is the pollutant flux calculated, i.e. the quantity of pollutant effectively moving, what enables to quantify the environmental risk of pollution effectively.

Usual measurements are performed by applying the Darcy's law based on aquifer hydraulic conductivity estimations and hydraulic gradient measurements. It is further known to use a so-called dilution method to measure the groundwater flux. In such a dilution method, a tracer is injected into a groundwater well instantaneously at the beginning of the experiment and the evolution of concentration of the tracer in the well water is monitored with time. The groundwater flow crossing the well screens (here after called transit flow rate) causes a dilution of the tracer over time. Hence, groundwater flow can be quantified by measuring the rate of tracer concentration decline with time. If the groundwater flux is high, the concentration will decrease rapidly, and vice versa. However, such techniques provide only an estimate of groundwater flux at a given time which is not representative of the dynamics of groundwater flow in the aquifer. Such methods also suffer from a poor sensitivity to changes in groundwater fluxes.

Using a mass-balance model for well-aquifer interaction developed by Brouyère (Brouyère, S. 2001, Doctoral Thesis, Université de Liège), Brouyère, S. 2003, Modelling tracer injection and well-aquifer interactions: A new mathematical and numerical approach, Water Resources Research, 39, 3), Brouyère at al. improved such conventional method by developing a so-called Finite Volume Point Dilution Method (FVPDM) (Brouyère et al, J. of Contaminant Hydrogeology, 95, 2008, 121-140). The FVPDM differs from the conventional dilution method in that the tracer is injected continuously, at a controlled low flow rate, and for a certain period of time. This improved method allows for a measurement of groundwater flow under steady-state flow conditions, i.e. as long as the groundwater flow does not vary during the measurement.

Jamin & Brouyère. further improved the FVPDM by adapting the calculation when FVPDM is performed over a long period of time. This allows to measure transient groundwater flows conditions (Jamin & Brouyère. J. of Contaminant Hydrology, 218, 2018, 10-18).

However, such methods suffer from limitations such as a long stabilization time needed before the measure can be interpreted. This is particularly the case when the groundwater flow is slow. In such cases, the stabilization time may be up to 50 or 100 hours. In addition, there is a limit imposed by the transit flow rate of the groundwater well, which is usually not known before the FVPDM measurement. This limit can be explained as follows: the more we inject in the well, the more disturbance is created on the transit flow rate. A transit flow rate is considered to be the flow rate of groundwater across the well, usually in a horizontal direction when a well usually is bored in a vertical direction. From a certain injection flow rate (referred to as the *critical* injection flow rate) and for injection rates higher than this *critical* injection flow rate, water pounding and radially diverging flow conditions are created around the tested well (Brouyère, S. 2001, Doctoral Thesis, Université de Liège, chapter III). In such a case, water leaving the well across the well screen is only injected water, the transit flow rate across the well is cancelled and groundwater fluxes prevailing in the aquifer in the vicinity of the tested well cannot be measured. This means that the tracer injection rate should remain lower than a certain level (which is usually unknown prior to the FVPDM measurement), for the FVPDM experiment to be successful. It also means that the injection flow rate defined in the experimental setup must deliberately be set low to increase the chances of a successful FVPDM experiment. Because of such a limit in the injection rate, it is impossible to decrease the stabilisation time.

To solve or alleviate one or more of the above-mentioned problems, a solution was sought and an improved method for groundwater flux measurement was developed, with a module for performing such measurement.

SUMMARY OF THE INVENTION

Particularly, the invention aims at providing an improved Fast-FVPDM method and a module capable of a faster measurement of groundwater flux, such as with reduced stabilisation time. The invention also aims at providing a module capable of monitoring the changes in groundwater flux over the measurement period.

To this aim, according to a first aspect of the present invention, there is provided a module for measuring groundwater flux comprising:

- a fluid circuit loop having an abstraction connection and a discharge connection for connecting with a groundwater well respectively at two ends of a column of fluid in said groundwater well;
- an input line for receiving a volume of tracer, said input line being fluidly connected to the fluid circuit loop upstream from the discharge connection, and comprising an injection pump for injecting said volume of tracer through the discharge connection in the groundwater well;
- an output line for extracting a volume of fluid, said output line being fluidly connected to the fluid circuit loop downstream from the abstraction connection;
- first measuring unit for measuring a tracer concentration in the fluid, said measuring unit being fluidly connectable to the fluid circuit loop between the abstraction connection and the discharge connection;

wherein the output line comprises an extraction pump for extracting a volume of fluid.

The abstraction connection is thus a connection configured for the in-take of fluid from a column of fluid of a well. The fluid is brought in a circulation loop, until the discharge connection. The discharge connection is a connection configured to inject fluid to the column of fluid of the well.

The groundwater flux measurement or transit flow rate measurement with such a module is advantageously faster than with the experimental setup of the prior art. By extracting a volume of fluid with an extraction pump in the module, water pounding in the well is avoided. This allows the tracer to be injected at a higher flow rate and therefore it increases the renewal of the water in the well, reducing the time required for stabilization and ultimately reducing the time required for groundwater flux measurement, such as by a factor 2 to 10, for example by a factor 6.

The volume of fluid extracted by the extraction pump may be lower, equal or higher than the volume of tracer injected. The volume of fluid extracted may advantageously be such that it does not disturb the transit flow rate. Advantageously, the volume may be adapted to the type of measurement desired. If a measured signal is preferably obtained through a high concentration of tracer or a high concentration of solute, it will be preferred to have a higher extracted volume. This renders the module easily adaptable to different situations. The ratio of volume of fluid extracted to the volume of tracer injected is preferably at least 1/100, more preferably at least 1/50 or at least 1/10. For example, a flow rate of fluid extracted may be higher than a flow rate of fluid injected, typically - when extracting during the same period of time as injecting - resulting in a higher volume of fluid extracted than a volume of fluid injected, e.g. in case of a relatively long well and/or of a well with a relatively low transit flow rate. Then, the circulation flow rate is correspondingly low, resulting in relatively long distribution time of the injected fluid over the well. In such circumstances, one may consider extracting more volume than injected for a reliable measurement. Alternatively, the flow rate of the extracted fluid can be lower than the flow rate of the injected fluid as long as the critical injection flow rate is not exceeded. This allows for some flexibility in use of the module in the field, where the circumstances are typically less controlled than in a laboratory environment.

Advantageously, the volume of fluid extracted by the extraction pump may be equal to the volume of tracer injected via the input line. As such, it can be ensured that at all times during the use of the module on the well, the transit flow across the well remains, thus allowing reliable measurements.

In the context of this disclosure, the wording equal means that a volume of fluid extracted differing from a volume of tracer injected by less than 10 %, preferably by less than 5 %, even more preferably by less than 3 %.

When the module is connected to a groundwater well, the injection pump and the extraction pump may for example be programmed and/or configured and/or calibrated at the same flow rate and be started simultanenously, thereby enabling an equal volume to be injected (i.e. a volume of tracer injected by the injection pump) and extracted (i.e. a volume fluid extracted by the extraction pump). By operating the pumps at the same RPM and preferably simultaneously, it can be controlled that the flow rate of fluid extracted can be the same as the flow rate of tracer injected. As such, it can be ensured that the transit flow across the well remains, allowing reliable measurements to be possible during use. As explained above, when too much fluid, tracer or any other fluid, is injected in a well, at a certain injected flow rate, i.e. the critical injection flow rate, there is no transit flow across the well anymore, and no reliable measurements can be done. Similarly, when there is too much fluid extracted out of the well, at a certain extraction flow rate, i.e. the critical extraction flow rate, there is no transit flow rate over the well anymore and reliable measurements are not possible any more. Since the critical injection flow rate and the critical extraction flow rate are usually not known to the operators before measurements are done, operators can now use the module without having the concern of accidentally exceeding the critical injection flow rate and/or the critical extraction flow rate.

Alternative uses may comprise the injection pump and the extraction pump being programmed at different flow rate to either increase the tracer injection or the groundwater extraction according to the needs. Advantageously, it may be programmed that the flow rate of the extraction pump has a minimum value such that the difference between the flow rate of the injection pump and the flow rate of the extraction pump results in a value lower than the critical transit flow rate, when the later is known.

The first measuring unit for measuring a tracer concentration in the fluid is preferably fluidly connectable to the fluid circuit loop upstream from the connection of the fluid circuit loop with the input line. Hence, the first measuring unit measures the tracer concentration in the fluid having circulated in the groundwater well.

The module enables to simplify the interpretation of the measurements, such as by avoiding a complex calculation. When the volume of fluid extracted is equal to the volume of tracer injected, the mass balance may be simplified.

The measurement with such module enables to capture small changes of groundwater fluxes over time. For example, the module of present invention may be able to detect groundwater flow variations 3 times smaller than the FVPDM monitoring method and may capture changes of groundwater flux up to 6 times faster.

The measurement with such module may be adapted to steady state and transient flow conditions. In particular, it improves the temporal sensitivity of the method to groundwater flow variations under transient flow conditions.

The module further enables a continuous monitoring of the groundwater flux, contrary to the prior art classical dilution methods that intrinsically are of short times, such as during a period from several hours to several days or weeks.

The module is advantageously easy to operate. The fluid circuit loop may be easily connected to the groundwater well. The injection pump and the extraction pump may be easily switched on and off independently allowing to use the module for classical point dilution method and traditional FVPDM monitoring to be performed in addition to the present Fast-FVPDM method.

The module may advantageously be compact and/or transportable. The fluid circuit loop, the measuring unit(s) and the pumps may for example be integrated in a container. The input line and the output line may for example be accessed through dedicated holes in the container. The module is for example in a container of a volume of about 4 to 1000 L, preferably about 50 to 200 L.

A column of fluid may be a given interval in a groundwater well on which the measurement is performed.

The module may further comprise an initial measuring unit for measuring an injected tracer concentration, said initial measuring unit being fluidly connectable to the fluid circuit loop.

The presence of an initial measuring unit is advantageous when measurement is done over a long period of time, such as more than 24h, such as one week for example or more. The tracer concentration in the tracer tank may indeed vary for different reasons such as for example a chemical degradation or a variation of temperature. It also enables to measure a relative concentration between the first measuring unit and the initial measuring unit. It may further give an indication on a status of the first measuring unit. It may further enable to compare data between the first measuring unit and the initial measuring unit. By providing the initial measuring unit, the tracer concentration can be measured initially, preferably before the tracer enters the fluid circuit loop. The measurement can be performed by sampling or can be performed in-line.

The initial measuring unit is preferably located on the input line of the module. Such an initial measuring unit located on the input line may enable to obtain the tracer concentration before such tracer is circulated in the fluid circuit loop. By providing the initial measuring unit in the input line, the measurement of the tracer concentration can be done inline, such as in a continuous way. The initial measuring unit may also be located in the tracer tank.

The fluid circuit loop of the module may further comprise a bypass between the initial measuring unit and the first measuring unit to calibrate said first measuring unit with said initial measuring unit. Such a bypass may facilitate the comparison of data between the initial and the first measuring units. The first measuring unit measures the tracer concentration in the fluid returning from the well. By calibrating the first measuring unit with the initial measuring unit via the bypass, it can be obtained that both measuring units show the same values for the same concentrations. This allows for a more accurate and/or more reliable measurement of the concentration.

The fluid circuit loop of the module may further comprise a first valve located downstream of the initial measuring unit and a second valve located upstream of the first measuring unit. The first valve and the second valve advantageously render the module easy to operate. The first valve and the second valve may be different or the same. For example, the first valve and/or the second valve may be a 3-way valve. It enables to move easily from one operation to a second operation of the measurement.

The bypass of the fluid circuit loop may preferably be connected to the first valve and to the second valve. This enables to circulate the fluid through the bypass or not by switching one or more of the appropriate valve(s).

The module may comprise further valves such as for example at the abstraction connection and/or at the discharge connection. For example, a tap may be foreseen at one or more of such connections for example to avoid spilling of groundwater or to control or to adjust the hydraulic pressure within the circulation loop or control the mixing flow rate.

The abstraction and/or discharge connection may directly connect the fluid circuit loop to the column of fluid, thus each connection is brought to one end of the column of fluid, or may indirectly connect the fluid circuit loop to the column of fluid. An indirect connection may be a connection through to tubing or hoses going into the well, thus the connection with the column of fluid may be at the end of a tubing or hose.

The module may advantageously comprise a second measuring unit for measuring a solute concentration in the fluid, said second measuring unit being fluidly connectable to the fluid circuit loop. Such a second measuring unit enables to combine the measurement of groundwater flux with the measurement of any solute concentration and solute mass fluxes in groundwater, such as in an aquifer.

In the context of this disclosure, the wording solute means any chemical species dissolved in the groundwater appart form the tracer used to measure the groundwater flux. Such solute may be a nutrient (nitrate, phosphate ...), a metallic species, an ion, a hydrocarbon or any other dissolved chemical of interest in groundwater.

The second measuring unit is preferably located in the fluid circuit loop downstream from the first measuring unit and upstream from the discharge connection. Such a configuration allows to first measure the concentration of the tracer, then to measure the solute concentration, prior to discharging the volume of fluid through the extraction pump. Alternatively, the second measuring unit can be integrated to the first measuring unit, providing a single measuring unit for measuring the tracer concentration and the solute concentration. Such integrated measuring unit may be provided with a single sensor allowing to measure both concentrations, or with two sensors with a sensor measuring its associated concentration.

By connectable, it is understood that any of the measuring units are directly connected to the fluid circuit loop, such as with a hose connection, or are indirectly connected, such as through a removable connection line, or are connectable through any possible intermediate means. It can be understood that the initial and first measuring unit will be chosen as a function of the nature of the tracer, while the second measuring unit will be chosen as a function of the nature of the solute.

The module may further comprise means for controlling a flow rate of the extraction pump. Alternatively, or additionally, the module may further comprise means for controlling a flow rate of the injection pump. The volume of fluid extracted is for example evaluated by a flowrate control based on a flowrate measurement. The flow rate control may be for example on the pump itself or may be through a tap and a flow meter connected to the fluid circuit loop 1. A flow meter may for example be a pulse counter or an RPM (rate per minute)-control of the pump. Advantageously, the extraction pump is controlled to run synchronously with the injection pump. For example, the injection pump and the extraction pump can be of the same type. When both pumps then run at the same RPM (rate per minute), the flow rate of the extraction pump can be understood to be the same as the flow rate of the injection pump. Thus, control of the flow may be done via control of the RPM of the pump. Alternatively and/or additionally, flow rate sensors can be provided upstream of the extraction pump to measure the flow rate and to control the operation of the extraction pump.

Optionally the fluid circuit loop may also comprise at least one manometer to measure the pressure in the fluid circuit loop, such as for example between a pump and a valve. By measuring the pressure in the fluid circuit loop, pressure variations can be detected. It can thus be controlled that the pressure is constant within the circuit loop, especially when using injection and/or extraction pumps whose flow rate are pressure sensitive.

According to a second aspect, there is provided a system for measuring groundwater flux comprising a module as recited above and a circulation pump for circulating the fluid in the groundwater well, said circulation pump being connectable to the abstraction connection of the module. Advantageously, the circulation pump will homogenize the fluid in the tested well and mix the tracer with such fluid. Advantageously, the circulation pump is provided in the well, to more efficiently mix the injected tracer with the fluid in the well.

Preferably the circulation pump of the system is a submersible pump. The submersible pump is preferably placed at the lower level of the column of fluid in the groundwater well.

The column of fluid may be a tested interval on which the measurement is performed. Hence the lower level of the column of fluid may be different from the lower level of the groundwater well.

Advantageously, the abstraction connection of the fluid circuit is lower in the well than the discharge connection, the discharge connection may be higher in the well column. As such, there is sufficient distance between the discharge connection and the abstraction connection to allow some mixture of the injected tracer with the well fluid. By placing the circulation pump at the abstraction connection, which is at the lower end of the well, optimal mixing of the tracer with the well fluid can be obtained. However, it is understood that the circulation pump can be provided at the discharge connection, which may be at an upper end of the well.

The system for measuring groundwater flux may further comprising a control unit for controlling at least the first measuring unit. It can be used to control sequences of the measurement, for example, and measurement at a given injection/extraction flow rate, then at another flow rate to obtain a second steady state, then a stop of the injection/extraction and a simple dilution etc.

The system may further comprise a processing unit for calculating groundwater fluxes from the raw data recorded by one or more of the measuring unit(s) from the module. In an embodiment, the processing unit can be integrated to the control unit.

Advantageously, the module may include means for remote data transmission, such as for example telemetry for real-time data transmission, preferably wireless transmission.

According to a third aspect, there is provided a method for measuring groundwater flux comprising the following steps:

- providing a groundwater well forming a column of fluid;
- providing a module according to the first aspect;
- circulating the fluid in the fluid circuit loop of the module with a circulation pump;
- injecting a volume of tracer in the groundwater well with the input line of the module through the discharge connection of the module;
- measuring a tracer concentration in the fluid coming from the abstraction connection with the first measuring unit of the module;
- extracting a volume of fluid with the output line of the module with the extraction pump of the module.

The groundwater well may for example be a screened well.

Preferably, the volume of fluid extracted by the extraction pump is equal to the volume of tracer injected via the input line.

In some embodiments, the measurement of tracer and/or solute concentration may be performed in the groundwater well itself.

In some embodiments, the column of fluid is a given interval which may be varied in length and or in vertical position along the groundwater well during the method. The measurement can be performed on one or more columns of fluid or intervals. A measurement on two or more intervals can be performed subsequently with such method.

Preferably, the steps of extracting a volume of fluid and injecting a volume of tracer are performed simultaneously. By doing such steps simultaneously, one may control the flow rate of the injection pump of the module and the flow rate of the extraction pump of the module and hence obtain the equal volumes of injected tracer and extracted fluid. By performing the steps simultaneously, it can be more easily controlled that the same volume of fluid is extracted as the volume of tracer injected, allowing the well to remain stable, thus reducing the stabilisation time.

The method may further comprise a step of measuring an injected tracer concentration. Such step enables to obtain an initial tracer concentration when performed at the start of the method. The initial tracer concentration is the concentration of the tracer injected into the fluid circuit, prior to injection. It thus enables to compare the injected tracer concentration with the measured tracer concentration, at any time during the method. Such comparison gives an indication of the tracer concentration in the well, which in turn gives an indication of the transit flow rate of groundwater across the well, namely the groundwater flow. As such, by measuring the tracer concentration of the well fluid, an indication of the groundwater flow, i.e. flux, can be obtained. In particular, the ratio between the tracer concentration measured in the well and the injection tracer concentration gives an indication of the groundwater transit flow rate, later converted to groundwater flux. Namely, when the groundwater flux is relatively high, this ratio is low as a consequence of a high tracer dilution. Conversely, when the groundwater flux is low the ratio is high, due to a lesser dilution of the injected tracer.

The method may further comprise a step of measuring a solute concentration in the fluid. This is advantageous to obtain an information about pollutants in the groundwater well. Advantageously, the method enables to measure a solute concentration at the same time as measuring a flux of the groundwater well. This further contributes to obtain information about solute mass flux and about the dynamics of pollution in an aquifer for example.

BRIEF DESCRIPTION OF THE DRAWINGS

The invention will be detailed with respect to the following figures.

Figure 1 is a schematic view of a system according to the invention.
Figure 2 is a schematic view of a flow scheme of a module according to the invention.
Figure 3 is a further schematic view of a system according to the invention, showing the terms used in the mass balance equation.
Figure 4 is a graph representing the measured tracer concentration normalized according to the injected tracer concentration as a function of time.
Figure 5 is a graph representing the measured tracer concentration normalized according to the injected tracer concentration and the correspond flux as a function of time.
Figure 6 is a graph representing the measured solute concentration as a function of time.

DETAILED DESCRIPTION OF THE INVENTION

The present invention will be further elucidated with reference to figures of exemplary embodiments. Corresponding elements are designated with corresponding reference signs. It is noted that the figures are schematic representations of embodiments of the invention, and are not to scale.

It is clear to the person skilled in the art that the invention is not limited to the embodiments described above. Many alternatives are possible within the scope of protection as formulated in the claims hereafter.

For the purpose of clarity and a concise description, features are described herein as part of the same or separate embodiments, however, it will be appreciated that the scope of the invention may include embodiments having combinations of all or some of the features described. It may be understood that the embodiments shown have the same or similar components, apart from where they are described as being different.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage. Many variants will be apparent to the person skilled in the art. All variants are understood to be comprised within the scope of the invention defined in the appended claims.

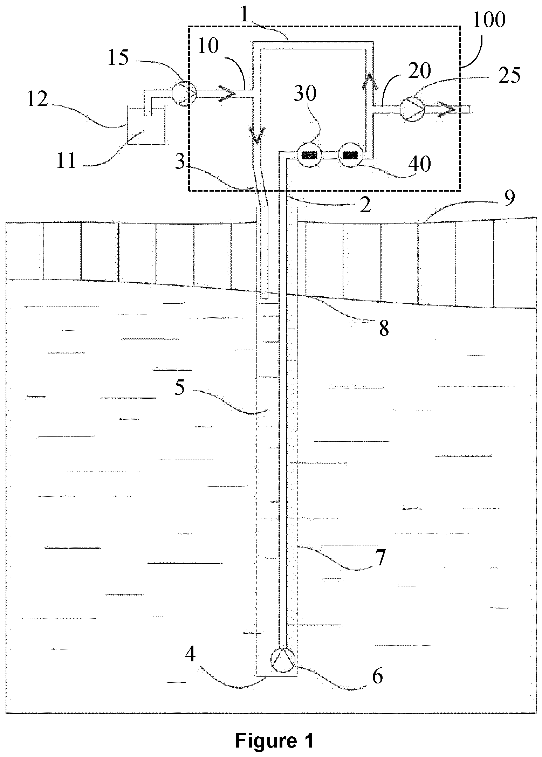

Figure 1 presents a system for measuring groundwater flux according to one embodiment of the invention, with module 100 schematically represented by dashed line. As can be seen in Figure 1, the system for measuring groundwater flux may comprise a fluid circuit loop 1 having an abstraction connection 2 and a discharge connection 3. Both connections are connected to a groundwater well 4. Said groundwater well 4 may be formed by means of boring for example and inserting a screen 7 to retain the ground. Said screens are well-known for groundwater well. They can be metallic screens or plastic screens. The diameter of the screen can be for example from about 40 mm to about 200 mm, for example about 50 mm. The screened area of the well is forming a fluid column 5 having an upper end 8 and a lower end 4. The height of the fluid column may be from about 50 cm to about 20 meters, for example about 5 meters. The fluid column 5 may be a water column. The level of the ground is represented by 9 in the Figure 1.

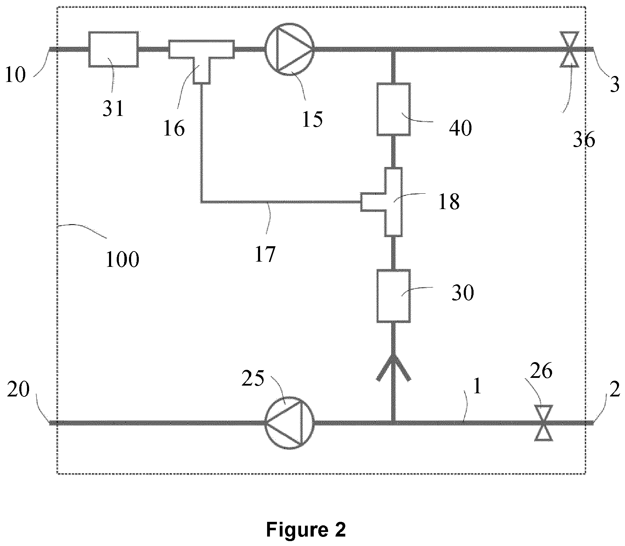

The abstraction connection 2 may be for example at the lower end of the fluid column 5, as illustrated in Figure 1, in that case the discharge connection 3 is at the upper end of the fluid column as illustrated. In other cases, the connections may be inversed. At the abstraction connection 2, fluid is abstracted out of the well into the fluid circuit loop 1. At the discharge connection 3, fluid is inserted into the well out of the fluid circuit loop 1. The fluid circuit loop 1 can be part of a module 100, as illustrated in Figure 1 and Figure 2. In an embodiment, the module 100 can be comprised in a housing for transportation purposes. The abstraction connection 2 and/or the discharge connection 3 may be embodied as valve connections at or near a housing of the module 100. Then, a hose or pipe can be connected to the valve connections 2, 3 and can be inserted into the well 4. In another example, the hoses or pipes to be inserted into the well are fixedly connected to the fluid circuit loop 1 and can be e.g. folded into the housing of the module for transportation and unfolded for use. Then, the abstraction connection 2 and the discharge connection 3 is at a lower end of such hoses and/or pipes. The abstraction connection 2 may be connected with a mixing pump 6 for mixing the fluid column 5. The mixing pump 6 may be submersible pump, as illustrated in Figure 1. It may also be a surface pump connectable to the fluid circuit loop, a centrifugal pump, a peristaltic pump, a bladder pump, a foot valve, as long as the chosen pump allows a sufficient mixing flow rate and an ascent of the water to the surface. The aim of the mixing pump is to enable a mixing of the fluid in the fluid column. The mixing pump may be provided separated from the module.

By flux measurement is meant a value with units of length, for example in meters, over a unit of time, for example in minutes.

By fluid is meant the water naturally present in the ground with all its potential constituents, as well as a mixture between such water and an injected fluid as will be described hereafter. The water volume within the well is constantly mixed using the mixing pump 6 to ensure homogenous tracer distribution within the well as well as its circulation to the surface.

Figure 1 also shows a tracer 11 that may be present in a tracer tank 12 and that may go through an input line 10 said input line 10 being located upstream from the discharge connection 3. The flow of the fluid is represented by an arrow tip. In the input line, an injection pump 15 may be present, for injecting said tracer 11 through the discharge connection 3 in the groundwater well 4. The flow rate of injection at injection pump is measured and noted as $Q_{inj}$. The flow rate of the mixing pump 6 is preferably at a higher level than $Q_{inj}$, thereby pushing the fluid in the fluid circuit loop 1 from abstraction connection towards discharge connection. During use, the fluid going towards the discharge connection 3 may be a mixture of fluid from the groundwater well and fluid from the input line, such as a tracer solution 11.

A tracer as referred herein may include any substance that can become dissolved or suspended in water, or attached to a water molecule, and recovered or measured from a water sample. Groundwater tracers may be intentionally introduced (applied tracers) or naturally occurring substances (natural tracers). Examples of applied tracers are fluorescent dyes such as rhodamine WT (red), eosin (green), uranine (green), naphtionate and amino G acid (UV), and optical brighteners (various colors). Alternatively, soluble ions such as chloride, low level radioactive compounds, bacterial phage, microspheres etc. may be used.

Figure 1 also shows an output line 20 for extracting a fluid, said output line 20 being connected to the fluid circuit loop 1 and located downstream from the abstraction connection 2. In the output line 20, an extraction pump 25 is present, in order to extraction a volume of fluid that is advantageously equal to the volume of fluid injected. The fluid extracted is coming from the abstraction connection 2 of the well and may be a mixture of water and tracer solution.

When in use, a flow rate $Q_{ext}$ of the extraction pump 25 may advantageously be set so that it is equal to the flow rate of the injection pump, namely $Q_{inj}$. Optionally, the module may include a check valve on the fluid circuit loop 1 upstream from the input line 10, so as to prevent backward flow of fluid in the fluid circuit loop towards the output line 20.

The module further comprises a first measuring unit 30 for measuring a tracer concentration of the fluid returning from the well, said first measuring unit 30 being fluidly connectable to the fluid circuit loop 1 between the abstraction connection 2 and the discharge connection 3. The first measuring unit 30 is chosen to be able to measure a concentration of a tracer in the fluid. In one example, the tracer may be a fluorescent marker and the measuring unit may be a fluorometer. In another example, the tracer may be a colorant and the measuring unit may be a light absorption sensor. In yet another example, the tracer may be a saline tracer and the measuring unit may be an electrical conductivity sensor.

Optionally the module may comprise a second measuring unit 40 for measuring a solute concentration. The measuring unit 40 may be placed in the fluid circuit loop so that the module may measure a concentration in a solute.

Optionally, the measurement of tracer concentration and/or the solute concentration may be performed by locating the first measuring 30 and/or the second measuring unit 40 directly within the fluid column 5 between the upper end 8 and the lower end 4.

Figure 2 presents a schematic view of a flow scheme of a module 100 according to one embodiment of the invention. Such module with limits indicated by the dotted line 100 may be included in a container for example, for easy transportation to the field where the measurement will be done. The module may for example be placed in a volume of 110 L.

The fluid circuit loop 1 is delimited by, on the left side of Figure 2, the input line 10 and the output line 20 and on the right side of the figure by the abstraction connection 2 and the discharge connection 3. Valves 26 and 36 may be optionally added on the fluid circuit loop to respectively control the flow and/or the pressure on the abstraction connection 2 and the discharge connection 3. Two pumps are illustrated in this figure: the injection pump 15 which is present upstream from the discharge connection 3 and the extraction pump 25 which is present downstream from the abstraction connection 2. The mixing pump is not illustrated. When in use, the flow rate of the mixing pump will ensure the circulation of fluid from the abstraction connection 2 towards both the output line 20 and the first measuring unit 30 which is connected to the fluid circuit loop between the abstraction connection 2 and the discharge connection 3. In this illustrated embodiment, the first measuring unit 30 is located in the fluid circuit loop 1 and is positioned before the connection of the fluid circuit loop 1 with the input line 10. The fluid flows through the first measuring unit 30 goes towards the discharge connection 3. After flowing through the first measuring unit 30, the fluid is mixed with the tracer solution (shown in figure 1) coming from the input line 10. Circulation of fluid in the loop is optimized thanks to the control of the flow rate of the pumps. In particular, the flowrate of the extraction pump $Q_{ext}$ is advantageously equal to the flowrate of the injection pump $Q_{inj}$ which is smaller than the flow rate of mixing pump $Q_{mix}$.

The output line 20 is preferably connected with the fluid circuit loop 1 upstream from the connection of the fluid circuit loop with the input line 10 so that a volume of fluid may be extracted through said outline upstream from the injection of a fluid through said input line 10.

In the embodiment of Figure 2, an optional bypass 17 is present. Such bypass is connected to the fluid circuit loop 1 by an entry valve 16 and an exit valve 18. Such valves may for example be three-way valves. This enables to easily choose when the fluid uses this bypass or not. The bypass may for example be used to measure an initial concentration of a tracer before starting the measure in the groundwater well. The tracer goes through the input line 10 towards the bypass 17 and then towards the first measuring unit 30 where a concentration may be measured, before being extracted through the output line 20.

The fluid circuit loop 1 may comprise an initial measuring unit 31 to enable a measure of the tracer concentration in the input line, such as in the injection solution. Such initial measuring unit may be placed for example just after the tracer tank 12 on the input line. This is advantageous when measurement is done over a long period of time, such as more than 24h, such as one week for example or more. The tracer concentration in the tracer tank may indeed vary for different reasons such as for example a chemical degradation or a variation of temperature. It also enables to measure a relative concentration between the first measuring unit 30 and the initial measuring unit 31, and therefore allows for an interpretation of the results relative to the injected tracer concentration with a greater precision. It may further give an indication on a status of the first measuring unit 30 or a comparison of data.

The fluid circuit loop 1 may further comprise a second measuring unit 40 that is configured to measure solute of interest in the groundwater well, such as pollutants for example. It may give an indication of the concentration of such pollutant(s) or solute(s) in the groundwater well.

The present invention also provides for a method for groundwater flux measurement. The method makes use of the module or the system as recited above. The method may involve several steps. The method involves an injection of a tracer and an extraction of a fluid through an extraction pump. The volume of fluid extracted is advantageously equal to the volume of tracer injected. Preferably, the injection and the extraction are performed at a controlled flow rate. During the experiment, the fluid column of the tested well is circulated or agitated to ensure a homogeneous repartition of the tracer mass into the well. The tracer concentration is measured through a first measuring unit. Optionally, a measurement of the concentration of one or more of a selected solute may be performed. Such optional measurement may advantageously be performed simultaneously. It may be done by using a second measuring unit. The second measuring unit may be a selective probe for example or may be a semi quantitative equipment.

By measurement, one means a temporary or a continuous measurement. A continuous measurement of a flux is also referred to as a flux monitoring.

As an illustrative example, the method may include one or more of the following steps:

Optionally, a preliminary step of a groundwater flux measurement may be the dimensioning i.e. the definition of the parameters of the experimental setup such as one or more of the following: i) the tracer concentration in the tracer solution, ii) the injection flow rate, iii) the extraction flow rate, iv) the circulation flow rate, v) the duration of the measurement. This dimensioning can for example be done using flowcharts disclosed in the publications: Brouyère et al, J. of Contaminant Hydrogeology, 95, 2008, 121-140 and Jamin et al. J. of Contaminant Hydrology, 218, 2018, 10-18.

An example of dimensioning may be a 50 mm diameter well, screened on 1 meter height, a mixing volume of 5.239 L, an apparent groundwater flux of $10^{-5}$ m/s, an injection rate $Q_{inj}$ lower than 0.2 times the critical flow rate (nQt) of the well for the classic FVPDM measurement, a stabilized tracer concentration lower than 0.85 times the injection concentration.

Optionally, a next step may be to measure the tracer concentration in the tracer solution and to calibrate the tracer concentration in the first measuring unit 30 and the initial measuring unit 31 when present. One possible way to do this, is to set valves 16 and 18 so that the fluid goes through the bypass 17. The extraction pump 25 is switched on. The tracer solution is then pumped from the tank, enters the fluid circuit loop 1, passes through the measuring units 31 and 30, and is finally extracted from the loop in the output line 20. This action is maintained long enough to have a stable signal on both initial and first measuring units. The injected tracer concentration is noted as $C^t_{inj}$. Such calibration may also be performed without the bypass 17 for example by using a tracer concentration measurement unit immersed in the tracer tank 12.

Optionally, another step may be to measure the tracer background concentration in the groundwater well under test. The tracer background concentration may be defined as any presence of the tracer in the well before starting its injection. The tracer background concentration is for example a concentration of the tracer in the well before starting its injection. Such step may also optionally be performed to measure the solute background in the well. The solute background may be defined as any presence of a solute of interest in the well before starting its injection. The solute background is for example a concentration of a solute of interest in the well before starting its injection. To do this, the abstraction connection 2 may be connected to the lower level of the fluid column 5 of the well 4. The connection may be directly or may be through a hose, one end of the hose being connected to the abstraction connection 2 of the module 100 and the second end of the hose being placed at the lower level of the fluid column in the well. This may be done for example by positioning an end of hose of the fluid circuit loop at a lower end of the well. The discharge connection 3 is then connected to the upper level of the fluid column. As for the abstraction connection, the connection may direct or through a hose. This may be done for example by positioning an end of hose of the fluid circuit loop at an upper end of the well. The valves 26 and 36 are opened and the circulation is started with the circulation pump 6. The aim is to homogenize the concentrations of tracer and optionally of solute over the entire height of the fluid column of the well and to allow the measurement of concentration at the first measuring unit 30 and optionally at the second measuring unit 40. This operation is maintained until the concentrations of tracer and solute measurements are stabilized. Additional pumps may also be provided to accelerate the operation.

A next step may be the measuring (and/or monitoring) of the groundwater flux and optionally the solute flux. To do this, the abstraction connection 2 may be lowered to the lower level of the fluid column 5 at the bottom of the well 4 and connected to the fluid circuit loop 1. This may be a direct connection or a connection through a hose. The discharge connection 3 may be connected to the well with the end at the upper level of the fluid column. If not yet done, the valves 26 and 36 are opened and the circulation is started with the circulation pump 6. The purpose of this circulation is to homogenize the tracer concentration and optionally the solute concentration over the entire height of the fluid column in the well and to allow concentration measurements to be taken at the first measuring unit 30 and optionally the second measuring unit 40. Valves 16 and 18 are set so that the fluid does not enter the bypass 17. The injection pump 15 and the extraction pump 25 are switched on simultaneously. The flow rate of the injection pump $Q_{inj}$ and the flowrate of the extraction pump $Q_{ext}$ are advantageously set to an equal value and such values are preferably recorded. The pumps are kept running during the whole monitoring time or at least when the stabilization of the tracer concentration in the well $C^t_w$ and optionally the solute concentration in the well $C^s_w$ are reached.

The result of such measurement are times series of $Q_{inj}$, $Q_{ext}$, $C^t_{inj}$, $C^t_w$ and $C^s_w$ that may be interpreted into groundwater and optionally solute fluxes using a mass balance equation.

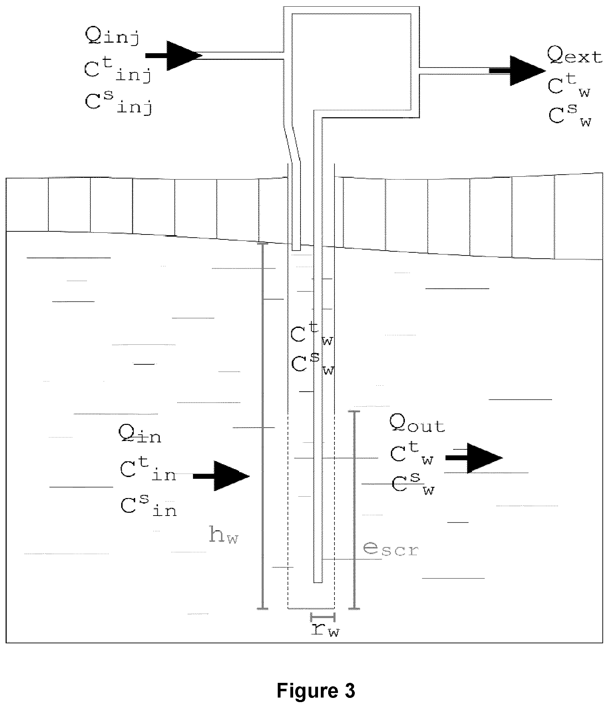

The calculation will now be further detailed, with the following terms, also represented in Figure 3.

$e_{scr}$= length of the well screen [L]
$r_w$= radius of the well [L]

$h_w$ = length of the fluid column [L]
$Q_{inj}$ = tracer injection flow rate [L³/T]
$Q_{ext}$ = fluid extraction flow rate [L³/T]
$Q_{in}$ = groundwater flow rate entering the well [L³/T]
$Q_{out}$ = groundwater flow rate exiting the well [L³/T]
$Q_t$ = natural groundwater transit flow rate passing through the well when $Q_{in} = Q_{out}$ [L³/T]
$Q_{cr}$ = critical tracer injection flow rate above witch the FVPDM experiment is failed [L³/T]

$C_{inj}^t$ = injected tracer concentration [M/L³]

$C_{in}^t$ = tracer concentration initially present in the groundwater [M/L³]

$C_w^t$ = tracer concentration in the well, exiting the well to the aquifer and extracted during the experiment [M/L³]

$C_{inj}^s$ = injected solute concentration [M/L³]

$C_{in}^s$ = solute concentration initially present in the groundwater [M/L³]

$C_w^s$ = solute concentration in the well, exiting the well to the aquifer and extracted during the experiment [M/L³]

The water mass balance is then represented by equation 1.

$$\frac{\partial \pi h_w r_w^2}{\partial t} = Q_{inj} + Q_{in} - Q_{out} - Q_{ext} \qquad [1]$$

When $h_w$ is constant;

$$Q_{inj} + Q_{in} = Q_{out} + Q_{ext} \qquad [2]$$

$$Q_{cr} = \pi Q_t \qquad [3]$$

The tracer mass balance for a constant groundwater flux under steady state conditions is represented by equation 4.

$$\pi h_w r_w^2 \frac{\partial C_w^t}{\partial t} = Q_{inj} C_{inj}^t + Q_{in} C_{in}^t - Q_{out} C_w^t - Q_{ext} C_w^t \qquad [4]$$

And the analytical solution assuming $C_{in}^t = 0$

$$C_w^t(t) = \frac{Q_{inj} C_{inj}^t - \left( Q_{inj} C_{inj}^t - (Q_{inj} + Q_{in}) C_{w,0}^t \right) e^{-\frac{Q_{inj} + Q_{in}}{\pi h_w r_w^2}(t - t_0)}}{Q_{inj} + Q_{in}} \qquad [5]$$

With

$$Q_{in} = Q_t \sin\left( arcos\left( \frac{Q_{inj} - Q_{ext}}{\pi Q_t} \right) \right) - \frac{Q_{inj} - Q_{ext}}{\pi} arcos\left( \frac{Q_{inj} - Q_{ext}}{\pi Q_t} \right) \qquad [6]$$

$t$ = time [T]
$t_0$ = initial time [T]
$C_{w,0}^t$ = initial tracer concentration in the well [M/L³]

As long as

$$\frac{|Q_{inj}-Q_{ext}|}{\pi Q_t} < 1 \qquad [7]$$

When equilibrium is reached (tracer concentration stabilized in the well), the concentration is obtained through equation 8.

$$C_w^t(stabil) = \frac{Q_{inj}C_{inj}^t}{Q_{inj}+Q_{in}} \qquad [8]$$

The tracer mass balance for a variable groundwater flux under transient state conditions is represented by equation 9.

$$C_w^t \pi r_w^{\ 2} \frac{\partial h_w}{\partial t} + h_w \pi r_w^{\ 2} \frac{\partial C_w^t}{\partial t} = Q_{in} C_{in}^t - Q_{out} C_w^t + Q_{inj} C_{inj}^t - Q_{ext} C_w^t \ [9]$$

With

$$Q_{out} = Q_{inj} + Q_{in} - Q_{ext} - \pi r_w^{\ 2} \frac{\partial h_w}{\partial t} \qquad [10]$$

$$h_w \pi r_w^{\ 2} \frac{\partial C_w}{\partial t} = Q_{inj}C_{inj} - Q_{inj}C_w - Q_{in}C_w \qquad [11]$$

Solved using an finite difference scheme over the time step $\Delta t = t_{n+1} - t_n$ with :

$$Q_{in}^* = \omega Q_{in\ n+1} + (1-\omega)Q_{in\ n} \qquad [12]$$

$$\frac{\partial C_w^t}{\partial t} = \frac{\Delta C_w^t}{\Delta t} = \frac{C_{w\ n+1}^t - C_{w\ n}^t}{(t_{n+1}-t_n)} \ [13]$$

$$\frac{\partial h_w}{\partial t} = \frac{\Delta h_w}{\Delta t} = \frac{h_{w\ n+1} - h_{w\ n}}{(t_{n+1}-t_n)} \ [14]$$

$$C_w^{t*} = \omega C_{w\ n+1}^t + (1-\omega)C_{w\ n}^t \ [15]$$

$$h_w^* = \omega h_{w\ n+1} + (1-\omega)h_{w\ n} \ [16]$$

$C_{in}^t$ = Supposed to be 0

$Q_{inj}$, $Q_{ext}$, $C_{inj}$ = known and controlled at all in the experimental setup

$h_w$, $C_w^t$ = know at all time, measured during the experiment

$\omega$ = [0,1]

and

$$Q_{in\ n+1} = \frac{-h_w^* \pi r_w^{\ 2} \frac{\Delta C_w}{\Delta t} + Q_{inj}C_{inj} - Q_{inj}C_w^* - (1-\omega)C_w^* Q_{in\ n}}{\omega C_w^*} \qquad [17]$$

In particular, the time series of the measured tracer concentration in the well gives an indication of the transit flow rate of the groundwater through the well, thus an indication of the flux can be given. As such, via an indirect measurement, namely measuring the tracer concentration over time, the groundwater flux can be obtained.

Thanks to the extraction pump 25 connected to the fluid circuit loop, the hydraulic load on the well is suppressed. This allows the tracer to be injected at a higher flow rate and therefore increases the renewal of the water in the well, ultimately reducing the time required for stabilization by a factor of 2 to 10.

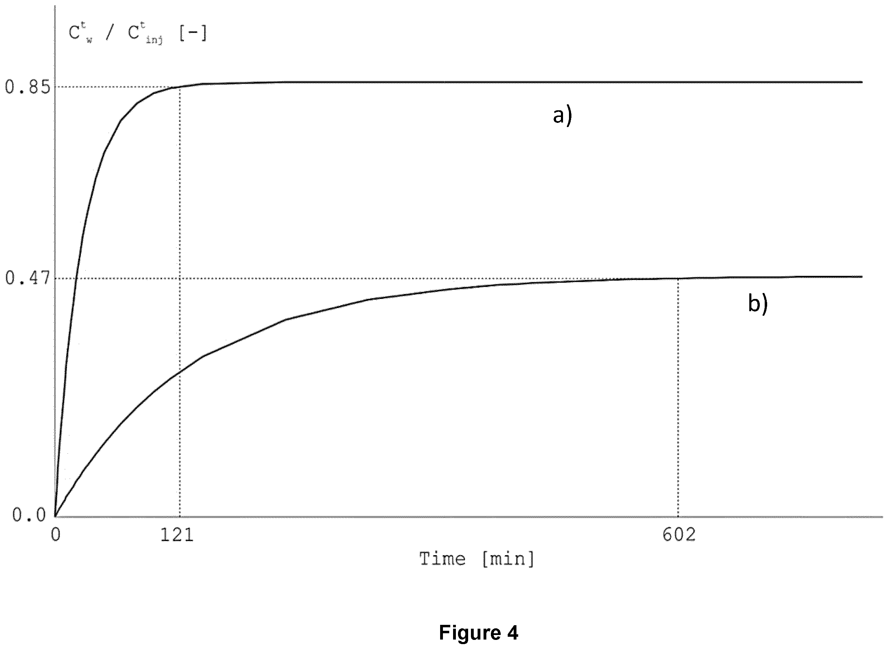

Figure 4 is an illustration of such stabilization time. Curve a) shows the time needed to reach stabilization of the tracer concentration $C^t_w$ relative to the injected tracer concentration $C^t_{inj}$ for present invention, namely 120 minutes while curve b) is a comparison with prior art method FVPDM, with 600 minutes required before stabilization. Hence time was reduced by about a factor 5 in this example. Time required for stabilization was calculated taking into account a 50 mm diameter well, screened on 1 meter height, a mixing volume of 5.2 L, a measured groundwater flux of $10^{-5}$ m/s, an injection rate lower than 0.2 times the critical flow rate of the well for the classical FVPDM measurement and a stabilized tracer concentration lower than 0.85 times the injection concentration.

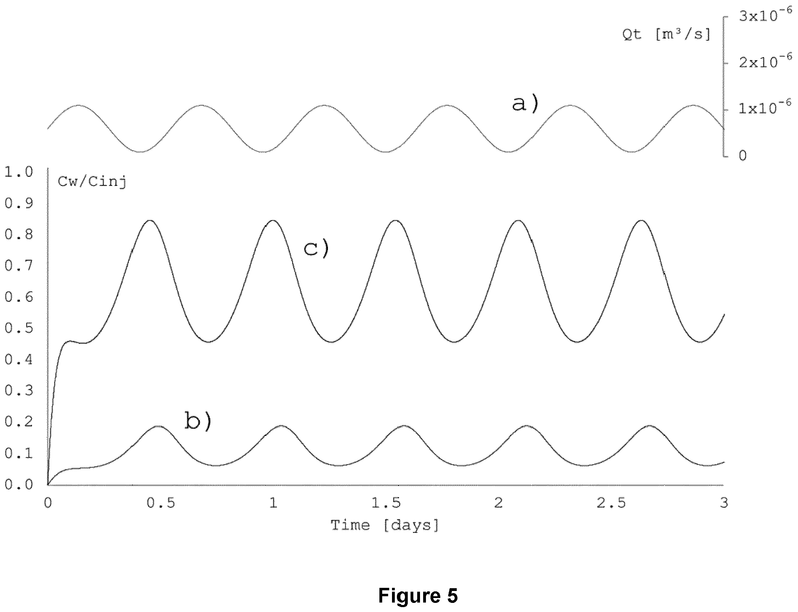

Figure 5 is an illustration of the greater sensitivity to groundwater flow variations with the present invention compared to the prior art. For the same groundwater flux, therefore the same transit flow rate Qt that fluctuates with time (curve a) and an optimized design, the amplitude of the tracer concentration variations recorded during a monitoring test according to present invention (curve c) is more than three times greater than the amplitude of the tracer concentration variations recorded during a FVPDM monitoring test according to the prior art (curve b). Hence, with the same sensor, the method of the present invention will be able to detect groundwater flow variations 3 times smaller than the FVPDM monitoring method.

As recited above, in addition to the measurement of groundwater flux, the module of present invention enables a direct measurement of the solute concentration with an optional second measuring unit 40. It is therefore possible to calculate the solute flux through a well.

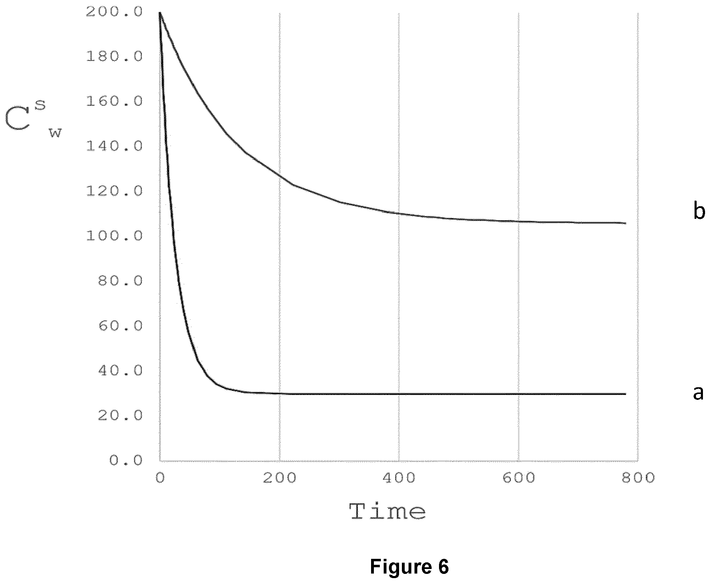

Figure 6 illustrates an example of solute measurement with the present method (curve a) and with the prior art FVPDM method (curve b). The solute concentration $C^s_w$ is obtained in a similar way as the tracer concentration, using the mass balance equation. A solute measurement with the present module is advantageously performed at the same time of the flux measurement. Since the method of present invention induces a higher dilution of the groundwater entering the well than the prior art FVPDM method, the detection limit of a solute in a well according to present invention will be higher than in a FVPDM measurement, all other parameters being equal. Stabilization time is also reduced for such a solute measurement.

**Claims**

1.  Module (100) for measuring groundwater flux comprising:

    - a fluid circuit loop (1) having an abstraction connection (2) and a discharge connection (3) for connecting with a groundwater well (4) respectively at two ends of a column of fluid (5) in said groundwater well (4);
    - an input line (10) for receiving a volume of tracer (11), said input line being fluidly connected to the fluid circuit loop (1) upstream from the discharge connection (3), and comprising an injection pump (15) for injecting said volume of tracer (11) through the discharge connection (3) in the groundwater well (4);
    - an output line (20) for extracting a volume of fluid, said output line being fluidly connected to the fluid circuit loop (1) downstream from the abstraction connection (2);
    - a first measuring unit (30) for measuring a tracer concentration in the fluid, said measuring unit (30) being fluidly connectable to the fluid circuit loop (1) between the abstraction connection (2) and the discharge connection (3);

    wherein the output line (20) comprises an extraction pump (25) for extracting a volume of fluid.

2.  Module (100) according to claim 1 wherein the volume of fluid extracted by the extraction pump (25) is equal to the volume of tracer injected via the input line (10).

3.  Module (100) according to claim 1 or 2 further comprising an initial measuring unit (31) for measuring an injected tracer concentration, said initial measuring unit (31) being fluidly connectable to the fluid circuit loop (1).

4.  Module (100) according to claim 3 wherein the fluid circuit loop (1) further comprises a bypass (17) between the initial measuring unit (31) and the first measuring unit (30) to calibrate said first measuring unit (30) with said initial measuring unit (31).

5. Module (100) according to claim 3 or 4 wherein the fluid circuit loop (1) further comprises a first valve (16) located downstream of the initial measuring unit (31) and a second valve (18) located upstream of the first measuring unit (30).

6. Module (100) according to claim 5 wherein the bypass (17) is connected to the first valve (16) and to the second valve (18).

7. Module (100) according to any of the previous claims further comprising a second measuring unit (40) for measuring a solute concentration in the fluid, said second measuring unit (40) being fluidly connectable to the fluid circuit loop (1).

8. Module (100) according to any of the previous claims wherein the second measuring unit (40) is located in the fluid circuit loop (1) downstream from the first measuring unit (30) and upstream from the discharge connection (3).

9. Module (100) according to any of the previous claims further comprising means for controlling a flowrate of the extraction pump (25).

10. System for measuring groundwater flux comprising a module (100) according to any of the previous claims and a circulation pump (6) for circulating the fluid in the groundwater well, said circulation pump (6) being connectable to the abstraction connection (2) of the module (100), preferably the circulation pump is a submersible pump.

11. System according to claim 10 further comprising a control unit for controlling at least the first measuring unit (30).

12. Method for measuring groundwater flux comprising the following steps:

- providing a groundwater well (4) forming a column of fluid (5);
- providing a module (100) according to any of claims 1 to 9;
- circulating the fluid in the fluid circuit loop (1) of the module (100) with a circulation pump (6);
- injecting a volume of tracer (7) in the groundwater well (4) with the input line (10) of the module (100) through the discharge connection (3) of the module (100);
- measuring a tracer concentration in the fluid coming from the abstraction connection (2) with the first measuring unit (30) of the module (100);
- extracting a volume of fluid with the extraction pump (25) of the module (100).

13. Method according to claim 12 wherein the volume of fluid extracted by the extraction pump (25) is equal to the volume of tracer injected via the input line (10).

14. Method according to 12 or 13 wherein the steps of extracting a volume of fluid and injecting a volume of tracer are performed simultaneously.

15. Method according to claim 12 to 14, further comprising a step of measuring a solute concentration in the fluid.

**Figure 1**

**Figure 2**

**Figure 3**

**Figure 4**

**Figure 5**

EP 4 220 241 A1

**Figure 6**

Europäisches
Patentamt

European
Patent Office

Office européen
des brevets

# EUROPEAN SEARCH REPORT

Application Number

EP 22 15 4038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAMIN PIERRE ET AL: "Innovative Contaminant Mass Flux Monitoring in an Aquifer Subject to Tidal Effects", GROUND WATER MONITORING AND REMEDIATION., vol. 40, no. 2, 1 March 2020 (2020-03-01), pages 28-39, XP055938916, US ISSN: 1069-3629, DOI: 10.1111/gwmr.12366 * abstract; figure 3 * | 1-15 | INV. G01V9/02 G01F1/704 G01P5/00 |
| A | BROUYERE ET AL: "A new tracer technique for monitoring groundwater fluxes: The Finite Volume Point Dilution Method", CONTAMINANT HYDROLOGY, ELSEVIER, AMSTERDAM, NL, vol. 95, no. 3-4, 11 January 2008 (2008-01-11), pages 121-140, XP022417731, ISSN: 0169-7722, DOI: 10.1016/J.JCONHYD.2007.09.001 * abstract; figure 5 * | 1-15 | |

TECHNICAL FIELDS
SEARCHED     (IPC)

G01V
G01F
G01P

The present search report has been drawn up for all claims

| Place of search | Date of completion of the search | Examiner |
|---|---|---|
| The Hague | 7 July 2022 | Fernandes, Paulo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BROUYÈRE, S.** Doctoral Thesis. Université de Liège, 2001
- **BROUYÈRE, S.** Modelling tracer injection and well-aquifer interactions: A new mathematical and numerical approach. *Water Resources Research,* 2003, vol. 39, 3
- **BROUYÈRE et al.** *J. of Contaminant Hydrogeology,* 2008, vol. 95, 121-140
- **JAMIN ; BROUYÈRE. J.** *Contaminant Hydrology,* 2018, vol. 218, 10-18
- **BROUYÈRE et al.** *Contaminant Hydrogeology,* 2008, vol. 95, 121-140
- **JAMIN et al.** *J. of Contaminant Hydrology,* 2018, vol. 218, 10-18